(19) Europäisches Patentamt

European Patent Office

Office européen des brevets

(11) **EP 1 339 802 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **01999210.6**

(22) Anmeldetag: **06.12.2001**

(51) Int Cl.:
*C09B 67/06* (2006.01)     *C08J 3/22* (2006.01)
*C09B 67/20* (2006.01)

(86) Internationale Anmeldenummer:
**PCT/EP2001/013393**

(87) Internationale Veröffentlichungsnummer:
**WO 2002/046313 (13.06.2002 Gazette 2002/24)**

(54) **VERFAHREN ZUR HERSTELLUNG VON STAUBFREIEN, RIESELFÄHIGEN PIGMENTKONZENTRATEN**

METHOD FOR PRODUCING DUST-FREE, POURABLE PIGMENT CONCENTRATIONS

PROCEDE DE PRODUCTION DE CONCENTRES DE PIGMENTS COULANTS ET EXEMPTS DE POUSSIERE

(84) Benannte Vertragsstaaten:
**AT BE CH CY DE DK ES FI FR GB GR IE IT LI LU MC NL PT SE TR**

(30) Priorität: **07.12.2000 DE 10060718**

(43) Veröffentlichungstag der Anmeldung:
**03.09.2003 Patentblatt 2003/36**

(73) Patentinhaber:
• **Goldschmidt GmbH**
  **45127 Essen (DE)**
• **Glatt Ingenieurtechnik GmbH**
  **D-99427 Weimar (DE)**

(72) Erfinder:
• **SCHÄFER, Werner**
  **45219 Essen (DE)**
• **SCHEIBA, Manfred**
  **45138 Essen (DE)**
• **STADTMÜLLER, Stefan**
  **45309 Essen (DE)**
• **WEIMANN, Markus**
  **46240 Bottrop (DE)**
• **RÜMPLER, Karlheinz**
  **99452 Weimar (DE)**
• **WALTER, Ulrich**
  **99423 Weimar (DE)**

(56) Entgegenhaltungen:
WO-A-01/25351          DD-A- 300 596
FR-A- 2 438 073        GB-A- 1 590 154
GB-A- 2 009 204        US-A- 4 264 552
US-A- 4 277 288

EP 1 339 802 B1

**Beschreibung**

Gegenstand der Erfindung ist ein Verfahren zur Herstellung von staubfreien, rieselfähigen Pigmentkonzentraten unter Entzug des Wassers aus Pigmentsuspensionen, die Polymere und Dispergiermittel enthalten, im Wirbelschichttrockner. Die entstandenen kugelförmigen Pigmentkonzentrate sind staubfrei und gut rieselfähig. Weiterhin umfaßt die Erfindung die Verwendung so hergestellter Pigmentkonzentrate zum Einfärben von Kunststoffen und Polymeren.

Pigmentkonzentrate und Verfahren zu deren Herstellung für die genannten Anwendungen sind dem Stand der Technik zu entnehmen.

So beschreibt die DE-B-12 39 093 Trägermaterialien auf Basis einer Mischung aus einem amorphen Ethylen-Propylen-Block-Mischpolymerisat und einem kristallinen Polypropylen für die Herstellung von Pigmentkonzentraten. DE-A-26 52 628 bezieht sich auf die Verwendung von Polypropylenwachsen mit einer Viskosität von 500 bis 5 000 mPas (170 °C) und einem isotaktischen Anteil von 40 bis 90 %.

Kunststoffe werden üblicherweise unter Verwendung von Pigmentkonzentraten (Pigment-Masterbatchen) eingefärbt. Die Pigmentkonzentrate, hergestellt über Extrusionsprozesse, enthalten das entsprechende Pigment in Konzentrationen von etwa 20 bis 70 Gew.-%, einen polymeren Träger sowie meist verschiedenartige Substanzen (Wachse/ Netzmittel/Dispergiermittel), die den Einarbeitungsprozess der Pigmente unterstützen und für eine möglichst gleichmäßige Verteilung (Dispergierung) der Pigmente sorgen.

Das Dispergieren von organischen Pigmenten wird in bestimmten Fällen durch den Einsatz von Pigment-Flush-Pasten umgangen.

Die Herstellung von sogenannten Flush-Pasten ist Stand der Technik und von W. Herbst und K. Hunger in "Industrielle Organische Pigmente", 2. Auflage, S. 91-92, VCH Verlagsgesellschaft mbH, D-6945 Weinheim, 1995, genauer beschrieben. Bei dieser Technologie wird der bei der Pigmentherstellung normalerweise zunächst anfallende wässrige Pigmentpresskuchen nicht getrocknet und gemahlen, sondern in einem "Flush-"Prozess mit öligen Bindemitteln, wie Alkydharzen, Mineralölen, Zellulose-Acetobutyrat oder anderen geeigneten Substanzen, behandelt. Dabei wird das Wasser an der Pigmentoberfläche durch die organischen Substanzen verdrängt. Durch das Flushen werden somit die vor allem zur Agglomeratbildung führenden Verfahrensschritte der Pigmentherstellung, das Trocknen und das Mahlen, vermieden.

Die Herstellung der Flush-Pasten wird in einem Innenkneter vorgenommen. Presskuchen und Dispergierwachse werden im Kneter vermischt; das Wasser wird durch Erwärmung und Vakuum entfernt; das Wachs zieht auf die Pigmente auf. Dieses Verfahren ist diskontinuierlich, und die Pigmentpräparation muss anschließend konfektioniert werden.

Im Folienbereich stört Stippenbildung den optischen Eindruck und führt zur Rissbildung sowie zu unerwünschten Lichtstreueffekten.

Bei der Herstellung von Polymerfasern führen Pigmentagglomerate zur Verstopfung der Schmelzsiebe des Extruders und zum Faserbruch, der in der Regel von längeren Stillstandszeiten und erhöhtem Reinigungsbedarf der Anlagen begleitet ist.

In der DE-A-195 16 387 wird eine hocheffektive Dispergierung durch ein Dispergiermittel erreicht, welches eine Mischung verschiedener Polyolefinkomponenten und spezieller Polyacrylsäureester darstellt.

Die Herstellung der Pigmentpräparationen kann im festen Zustand durch Mischen als Dry Blend und/oder durch Schmelzemischen in geeigneten Extrudern oder Knetern erfolgen.

Üblicherweise werden die pulverförmigen organischen oder anorganischen Pigmente mit granulat- oder pulverförmigen Polymeren und entsprechenden Wachsen miteinander vermischt. Auch die Wachse werden pulverförmig eingesetzt. Sie werden entweder durch Sprühtechniken oder Vermahlungsprozesse erhalten. Die Korngrößen dieser Wachse liegen in der Regel bei < 1 000 μm. Je nach verwendetem Verfahren variieren die Korngrößenverteilungen natürlich.

Gemäß US-A-4 277 288, FR-A-2 438 073, US-A-4 264 552, GB-A-2 009 204 werden Pigmentgranulate in Wirbelschichtverfahren hergestellt. Dabei werden jedoch organische Pigmente in trockener pulveriger Form in einem Wirbelschichtmischer mit feuchten Additiven benetzt und anschließend bei gleichzeitiger Agglomeration in größere Granulatpartikel überführt.

Für eine optimale Dispergierung werden je nach Pigmenttyp bis zu 40 Gew.-% Wachs benötigt. Da zu hohe Wachsmengen immer wieder zu Migrationen und zu Ablagerungen an den Düsen führen, ist es von besonderem Interesse, Pigmentkonzentrate mit gut dispergierten Pigmenten bei möglichst geringen Anteilen an Wachsen herzustellen.

Gegenstand der Erfindung ist in einer ersten Ausführungsform ein Verfahren zur Herstellung von staubfreien, rieselfähigen, organischen Pigmentkonzentraten aus bei der Pigmentherstellung anfallenden Pigmentpresskuchen unter Zusatz von Keimbildnern, Netz- und Dispergiermitteln, wobei das Wasser in einem Wirbelschichtverfahren entzogen wird.

Bei diesem Verfahren wird das Wasser zwischen den Pigmentprimärteilchen entfernt und gegen die 0,1 - 1,0 μm großen Wirkstoffpartikel, d. h. Netzmittel, Dispergieradditiv und gegebenenfalls Polymeren ausgetauscht, so dass ein Agglomerieren der Pigmentteilchen vermieden wird.

Durch die erfindungsgemäße Wirbelschichttrocknung der Pigment-/Wirkstoffsuspension entstehen kugelförmige, staubfreie, gut rieselfähige Pigmentpräparationen.

Es entsteht also ein Pigmentkonzentrat, das in der Regel nicht weiter im Doppelwellenextruder mit anderen Hilfsstoffen dispergiert werden muss.

Beim Wirbelschichttrocknungsverfahren arbeitet man in der Regel kontinuierlich mit gleichzeitiger Konfektionierung. Jedoch ist auch eine diskontinuierliche Arbeitsweise möglich.

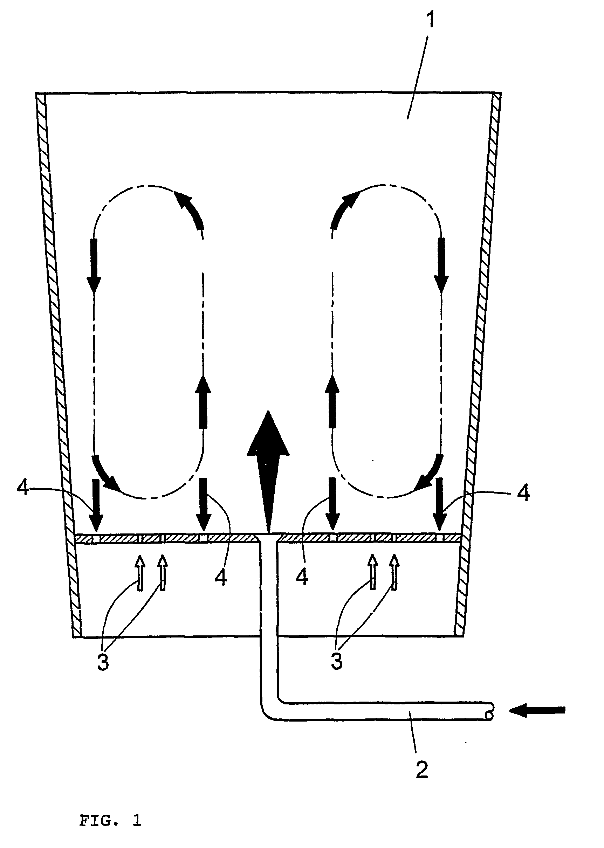

Nachfolgend wird das Wirbelschichttrocknen anhand der Figur 1 erläutert.

Die wässrige Formulierung, bestehend aus dem Pigmentpresskuchen und den Wirkstofflösungen, -dispersionen oder -emulsionen, wird mit einer Schlauchpumpe in die Wirbelschichtkammer 1 über eine Düse 2 von unten in den Wirbelschichttrockner eingesprüht. Alternativ ist auch die Zuführung über mehrere Düsen von oben und/oder von unten in den Wirbelschichttrockner möglich. Gegebenenfalls ist es möglich, durch verschiedene Düsen unterschiedliche Bestandteile einzubringen. Heißluft 3, die der Suspension entgegengeführt oder mitgeführt wird, lässt durch Verwirbelung das Wasser verdunsten, das nach oben aus der Wirbelschichtkammer 1 austritt. Die Suspension verbleibt für eine vorbestimmte Zeit in der Wirbelschichtkammer 1 und verlässt diese am unteren Auslass als trockenes, staubfreies, klassiertes, rieselfähiges Granulat.

Pulverkonzentrate im Sinne der vorliegenden Erfindung umfassen organische sowie anorganische Pigmente ebenso wie Gemische aus organischen und anorganischen Pigmenten, die als wässriger Presskuchen anfallen können. In üblichen Pigmentkonzentraten sind diese daher in der Regel in einem Mengenanteil von 30 bis 70 Gew.-% enthalten.

Besonders bevorzugt im Sinne der vorliegenden Erfindung umfassen die Pigmentkonzentrate 30 bis 60 Gew.-Teile der organischen und/oder anorganischen Pigmente in Pulverform bezogen auf 100 Gew.-Teile der Pigmentkonzentrate.

Besonders bevorzugte Polymerträger im Sinne der vorliegenden Erfindung umfassen insbesondere pulverförmiges Polyethylen (PE), Polypropylen (PP), Acrylnitril-Butadien-Styrol (ABS), Polystyrol (PS), Polyamid (PA), Polyurethan (TPU), Polyvinylchlorid (PVC), Polyethylenterephthalat (PT), Polycarbonat (PC), Acrylate und PTFE.

Besonders bevorzugte Polymerträger, die im Sinne der vorliegenden Erfindung als wässrige Dispersionen eingesetzt werden können, umfassen beispielsweise Polyethylen (PE), Polypropylen (PP), Polyacrylate (AC), Polyurethan (TPU) und Butadien-Kautschuk.

Das Pigment wird durch die Wirkstoffe gebunden und es entsteht ein staubfreies Granulat.

Erfindungsgemäß wird eine Wirbelschichtanlage zur kontinuierlichen Granulatstrocknung von Suspensionen und Lösungen oder auch speziell bei gleichzeitiger Zuführung von pulverigen Substanzen eingesetzt.

Das entstehende Granulat wird klassiert aus der Prozesskammer ausgetragen und bei Bedarf gekühlt. Dieser Vorgang ist variierbar und kann den speziellen Produktanforderungen individuell angepasst werden.

Als Dispergier- und Netzmittel als Bestandteile der wässrigen Formulierungen zur Behandlung des Pigmentpresskuchens können vorzugsweise folgende Substanzen verwendet werden:

- Polyethylenwachse, polar, unpolar

- Polypropylenwachse, unpolar

- Paraffinwachse

- Ethylenvinylacetatwachse

- Fettsäureester

- Metallseifen

- Montanwachse

- Polyalkylacrylate

- Organo-modifizierte Siloxane

- Säurewachse

- Esterwachse

- Oxidierte Wachse

- Wachse, pulverförmig

- Wachse, mikronisiert

- Wachse, im Wasser dispergiert

Vorzugsweise beträgt deren Menge in dem Pigmentkonzentrat 0,1 bis 50,0 Gew.-Teile.

Ein weiterer Gegenstand der Erfindung umfaßt die Verwendung von Pigmentkonzentraten zum Einfärben von Kunststoffen und Polymeren.

Ausführungsbeispiele:

Allgemeine Versuchsvorschrift zur Herstellung der Pigmentformulierung für den Eintrag in den Wirbelschichttrockner:

Formulierung der Suspensionen

X   Gew.-Teile wässriger Pigmentpresskuchen, Trockensubstanz 30-50 Gew.-% (Rest Wasser)
Y   Gew.-Teile wässrige Formulierung Dispergier- und Netzmittel
Z   Gew.-Teile wässrige Polymerdispersion

Die jeweilige Formulierung wird in einem Ultraturrax mit einer Drehzahl von ca. 3 000 U/Min. bei Raumtemperatur vermischt.

Die wässrige Pigmentformulierung enthält somit etwa 25 - 45 % Trockensubstanz und hat eine Viskosität von ca. 800 mPas. Sie ist mit einer Schlauchpumpe gut zu fördern.

Allgemeine Versuchsvorschrift für das Wirbelschichtverfahren:

In den Wirbelschichtreaktor wird zunächst ein Keimbildner eingebracht. Die Menge ist abhängig von der Größe der Maschine. Bei der verwendeten Labormaschine beträgt die Keimbildnermenge ca. 600 g.

Der Keimbildner ist meist ein Pigmentkonzentrat, ein Kugelgranulat von ca. 1 500 $\mu$m Durchmesser.

Vor der Wirbelschichttrocknung befindet sich der Keimbildner auf dem Bodensieb mit einer Maschenweite von ca. 100 $\mu$m.

Beim Start der Wirbelschichttrocknung wird erwärmte Luft von unten durch das Sieb geblasen, dadurch wird der Keimbildner in der Kammer verwirbelt. Es entsteht ein sogenanntes Wirbelbett.

Gleichzeitig wird ebenfalls von unten durch eine Düse mit einem Durchmesser von 1,2 mm die wässrige Pigmentsuspension in die Wirbelkammer eingesprüht.

Durch die Heißluft wird das Wasser abgedunstet, wobei gleichzeitig die Wirkstoffsubstanzen (Dispergier-, Netzmittel und gegebenenfalls Polymer) auf die Primärteilchen des Pigmentes aufziehen, dadurch wird das Agglomerieren der Primärteilchen vermieden.

Das Primärteilchen/Wirkstoffgemisch lagert sich auf den Keimbildnern ab.

Nach einer gewissen Zeit ist der Keimbildner mit der Trockensubstanz der neuen Rezeptur abgeführt, so dass nur gleichmäßige Granulate aus der eingebrachten neuen Rezeptur entstehen.

Prozessdaten

| Luftmenge: | 20 % |
| Lufttemperatur: | ca. 105 °C |
| Ablufttemperatur: | ca. 60 °C |
| Produkttemperatur: | ca. 70 °C |
| Sprühdruck: | 1,5 bar |
| Sprührate: | ca. 36 g/Min. |

Zur Beurteilung der Dispergierqualität von Pigmenten in Farb-Masterbatchen bediente man sich folgender Tests:

1. Druckfiltertest

Bei diesem Test wird eine Mischung aus Masterbatch und polymerem Träger, die einen Pigmentgehalt von 10 Gew.-% aufweist, in einem Extruder aufgeschmolzen und über ein definiertes Filterpaket extrudiert. Über einen definierten Zeitraum (1 h) wird der Druckanstieg verfolgt. Als Maß für die Güte des Masterbatches wird der Druckfilterwert (DF) bestimmt, der sich nach folgender Formel ergibt:

$$\mathrm{DF} = (P_{max.} - P_o) \times F \times 100/t \times K \times G \; (bar \times cm^2/g)$$

mit

$P_{max.}$ = Enddruck (bar)
$P_o$ = Druck bei Betrieb ohne Masterbatch
F = Filterfläche ($cm^2$)
t = Messdauer (min.)
K = Konzentration (%)
G = Extruderdurchsatz (g/min.)

Der Druckfilterwert gibt an, in welchem Maß ein Filterpaket durch Agglomerate zugesetzt wird. Ein sehr niedriger Druckfilterwert weist auf eine sehr gute Dispergierung der Pigmentkonzentrate hin.

2. Farbstärke

Einen weiteren Test zur Bestimmung der Dispergiergüte stellt die Bestimmung der Farbstärke eines Masterbatches dar. Hierbei wird das Masterbatch mit dem polymeren Träger auf einen Pigmentanteil von 0,2 Gew.-% verdünnt und mit Titandioxid aufgehellt (10 Gew.-Teile Titandioxid bezogen auf 1 Gew.-Teil Farbpigment). Dieses Material wird zu Platten verspritzt, an denen man die coloristischen Bestimmungen durchführt. Für diese Messungen hat sich das CIE-Lab-Farbsystem bewährt.
Je höher die Farbstärke im Vergleich zu einer Referenzprobe ist, desto besser ist die Verteilung des Pigmentes bzw. desto geringer ist der Agglomeratanteil in dem zugrundeliegenden Farb-Masterbatch.
Zum Vergleich wird die Farbstärke der Referenzproben per Definition mit 100 % festgelegt.

3. Stippen-Foliennote

Ein weiterer Test ist die visuelle Beurteilung von Farbstippen in einer ca. 50 $\mu$m starken Kunststofffolie unter dem Mikroskop. Es wird eine PE-Folie unter Einsatz von 1 Gew.-% eines 40 Gew.-%igen Pigmentkonzentrats hergestellt. Die Größe und Anzahl der Farbstippen wird durch Noten definiert:
Note 1: keine oder sehr wenig Farbstippen = gute Qualität
Zwischennoten
Note 6: sehr viele Farbstippen = schlechte Qualität

Beispiel 1:

| | |
|---|---|
| 40 | Teile (bezogen auf Feststoff) Pigment Rot 57:1 (aus Pigmentpresskuchen, Wasser ca. 70 %) |
| 10 | Teile Polyalkylacrylat (Tegomer®DA 102, Goldschmidt AG) |
| 50 | Teile Polyethylen-Polymerdispersion[1] |

Beispiel 2

| | |
|---|---|
| 50 | Teile (bezogen auf Feststoff) Pigment Rot 57:1 (aus Pigmentpresskuchen, Wasser ca. 70 %) |
| 15 | Teile Polyalkylacrylat (Tegomer®DA 102, Goldschmidt AG) |

(fortgesetzt)

| | 35 | Teile Polyethylen-Polymerdispersion[1] |

<u>Beispiel 3</u>

| 40 | Teile (bezogen auf Feststoff) Pigment Grün 7 aus Pigmentpresskuchen |
| 10 | Teile Organosiloxan (Tegopren®6875, Goldschmidt AG) |
| 50 | Teile Polyethylen-Polymerdispersion |

<u>Beispiel 4</u>

| 50 | Teile (bezogen auf Feststoff) Pigment Blau 15:1 aus Pigmentpresskuchen |
| 5 | Teile Organosiloxan (Tegopren®6875, Goldschmidt AG) |
| 10 | Teile Polyalkylacrylat (Tegomer®DA102, Goldschmidt AG) |
| 35 | Teile Polyethylen-Polymerdispersion[1] |

<u>Vergleichsbeispiel 1</u>

Herstellung im Doppelwellenextruder

| 40 | Teile Pigment Rot 57:1 |
| 30 | Teile Polypropylenwachs (Dispergiermittel)[2] |
| 30 | Teile Polypropylen (Finapro®PPH 11012) |

Die Rezeptur wurde im Taumelmischer bei Raumtemperatur vorgemischt und anschließend bei 180 bis 220 °C im Doppelwellenextruder gemischt und dispergiert. Der sich bildende Schmelzestrang wurde gekühlt und durch einen Granulator geschnitten. Es entstand ein relativ grobes, gleichmäßiges Zylindergranulat.

<u>Vergleichsbeispiel 2</u>

| 50 | Teile Pigment Rot 57:1 |
| 30 | Teile Polyethylenwachs[3] |
| 20 | Teile Polypropylen (Finapro® PPH 11012) |

Die Bestandteile wurden in einen Kneter gegeben, dort wurde durch Erwärmung und Vakuum das Wasser entfernt. Das Wachs ging an die Pigmentoberfläche (Flush-Prozess). Nach diesem Prozess musste das Knetergut vermahlen werden. Es entstand ein Mahlgut mit unterschiedlicher Korngröße und staubenden Anteilen.

<u>Vergleichsbeispiel 3</u>

| 50 | Teile (bezogen auf Feststoff) Pigment Rot 57:1 (aus Presskuchen, Wasser ca. 70 %) |
| 50 | Teile Polyethylenwachs[4] |

Die Komponenten wurden einem Flush-Prozess unterzogen und anschließend in Kugelmühlen dispergiert. Es entstand eine Präparation mit unterschiedlichen Korngrößen und staubenden Anteilen.

[1] Gemisch aus Polyethylen-Primärdispersion und Polyethylenwachsemulsion mit ionischen Emulgatoren
[2] Standard Polpropylenwachs
Erweichungspunkt: ca. 160 °C
Dichte 20°C: 0,89 g/cm$^3$
Viskosität 170°C: ca. 1.800 mPas
[3] Standard Polyethylenwachs
Erweichungspunkt: ca. 100 °C
Dichte 20°C: 0,92 g/cm$^3$
Viskosität 140°C: ca. 100 bis 200 mPas
[4] Standard Polyethylenwachs
Erweichungspunkt: ca. 102 °C
Dichte 20°C: 0,91 g/cm$^3$
Viskosität 140°C: ca. 200 mPas

| Beispiele | Korngrößenverteilung der Präparaion | Farbstärke im Vergleich zum Vgl.-Beispiel 1 | Stippen Foliennote | Druckfilterwert bar x cm$^2$/g |
|---|---|---|---|---|
| 1 | Kugelgranulat 100 % 1 200 µm | 118 | 3 | 0,5 |
| 2 | Kugelgranulat 100 % 1 200 µm | 116 | 3 | 1,0 |
| 3 | Kugelgranulat 100 % 1 250 µm | 110 | 3 | 1,5 |
| 4 | Kugelgranulat 100 % 1 300 µm | 115 | 2 | 1,0 |
| Vgl. 1 | Zylindergranulat 100 % 3 x 4 mm | 100 | 5 | 12,0 |
| Vgl. 2 | Mahlgut < 800µm 100% < 500µm 92% < 300µm 77% < 100µm 32% | 115 | 2 | 1,5 |
| Vgl. 3 | Mahlgut < 800 µm 100% < 500 µm 89% < 300 µm 70% < 100 µm 34% | 120 | 3 | 1,8 |

**Patentansprüche**

1. Verfahren zur Herstellung von staubfreien, rieselfähigen, organischen Pigmentkonzentraten aus bei der Pigmentherstellung anfallenden Pigmentpresskuchen unter Zusatz von Keimbildnern, Netz- und Dispergiermitteln, wobei das Wasser in einem Wirbelschichtverfahren entzogen wird.

2. Verfahren nach Anspruch 1, **dadurch gekennzeichnet, dass** man die Herstellung kontinuierlich oder diskontinuierlich vornimmt.

3. Verfahren nach einem der Ansprüche 1 oder 2, **dadurch gekennzeichnet, dass** man dem Pigmentpresskuchen anorganische und organische Pulverpigmente zusetzt.

**4.** Verfahren nach einem der Ansprüche 1 bis 3, **dadurch gekennzeichnet, dass** man die wässrigen Pigmentformulierungen einsetzt, die pulverförmige Polymerträger enthalten, umfassend insbesondere Polyethylen (PE), Polypropylen (PP), Acrylnitril-Butadien-Styrol (ABS), Polystyrol (PS), Polyamid (PA), Polyurethan (PU), Polyvinylchlorid (PVC), Polyethylenterephthalat (PET), Polycarbonat (PC), Polyacrylat (PMMA), Polyvinylacetat (PVAC), Polyvinylalkohol (PVA) und/oder Fluorpolymer (PTFE).

**5.** Verfahren nach einem der Ansprüche 1 bis 4, **dadurch gekennzeichnet, dass** man Netz- oder Dispergiermittel einsetzt, die ausgewählt sind aus unpolaren, polaren Polyethylenwachsen, unpolaren Polypropylenwachsen, Paraffinwachsen, Ethylenvinylacetatwachsen, Fettsäureestern, ten und/oder organo-modifizierten Siloxanen.

**6.** Verfahren nach einem der Ansprüche 1 bis 5, **dadurch gekennzeichnet, dass** man Polymerträger einsetzt, die in Wasser gelöst, emulgiert oder dispergiert sind.

**7.** Verfahren nach einem der Ansprüche 1 bis 6, **dadurch gekennzeichnet, dass** Netz- und Dispergiermittel in einer Menge von 0,5 bis 50,0 Gew.-% zugesetzt werden.

**Claims**

**1.** Process for preparing nondusting, free-flowing, organic pigment concentrates from pigment presscakes obtained in pigment preparation, with the addition of nucleators, wetting agents and dispersants, the water being removed in a fluidized bed process.

**2.** Process according to Claim 1, **characterized in that** preparation is conducted continuously or batchwise.

**3.** Process according to either of Claims 1 and 2, **characterized in that** organic and inorganic powder pigments are added to the pigment presscake.

**4.** Process according to any of Claims 1 to 3, **characterized in that** the aqueous pigment formulations are used which comprise pulverulent polymer carriers embracing in particular polyethylene (PE), polypropylene (PP), acrylonitrile-butadiene-styrene (ABS), polystyrene (PS), polyamide (PA), polyurethane (PU), polyvinyl chloride (PVC), polyethylene terephthalate (PET), polycarbonate (PC), polyacrylate (PMMA), polyvinyl acetate (PVAc), polyvinyl alcohol (PVA) and/or fluoropolymer (PTFE).

**5.** Process according to any of Claims 1 to 4, wherein wetting agents or dispersants are used which are selected from nonpolar and polar polyethylene waxes, nonpolar polypropylene waxes, paraffin waxes, ethylenevinyl acetate waxes, fatty acid esters and/or organo-modified siloxanes.

**6.** Process according to any of Claims 1 to 5, **characterized in that** polymer carriers are used which are in solution, emulsion or dispersion in water.

**7.** Pigment concentrate according to any of Claims 1 to 6, **characterized in that** wetting agents and dispersants are used in an amount of from 0.5 to 50.0% by weight.

**Revendications**

**1.** Procédé de production de concentrés de pigments organiques coulants et exempts de poussière, à partir de gâteaux de presse de pigments produits au cours de la production des pigments avec addition d'agents de germination, d'agents mouillants et dispersants, l'eau étant éliminée selon un procédé en couche fluidisée.

**2.** Procédé selon la revendication 1, **caractérisé en ce qu'**on effectue la production en continu et en discontinu.

**3.** Procédé selon une quelconque des revendications 1 ou 2, **caractérisé en ce qu'**on ajoute au gâteau de presse de pigments des pigments en poudre inorganiques et organiques.

**4.** Procédé selon l'une quelconque des revendications 1 à 3, **caractérisé en ce qu'**on utilise les formulations de pigments aqueuses qui contiennent des supports polymères pulvérulents comprenant, en particulier, le polyéthylène (PE), le polypropylène (PP), l'acrylonitrile-butadiène-styrène (ABS), le polystyrène (PS), le polyamide (PA), le polyuréthane (PU), le polychlorure de vinyle (PVC), le téréphtalate de polyéthylène (PET), le polycarbonate (PC), le polyacrylate (PMMA), le polyacétate de vinyle (PVAC), l'alcool polyvinylique (PVA) et/ou un polymère fluoré (PTFE).

5. Procédé selon l'une quelconque des revendications 1 à 4, **caractérisé en ce qu'**on utilise des agents mouillants ou dispersants qui sont choisis parmi des cires de polyéthylène non polaires, polaires, des cires de polypropylène non polaires, des cires de paraffine, des cires de vinylacétate d'éthylène, des esters d'acides gras et/ou des siloxanes organo-modifiés.

6. Procédé selon l'une quelconque des revendications 1 à 5, **caractérisé en ce qu'**on utilise des supports polymères qui sont dissous, émulsionnés ou dispersés dans l'eau.

7. Procédé selon l'une quelconque des revendications 1 à 6, **caractérisé en ce qu'**on ajoute des agents mouillants et dispersants dans une proportion de 0,5 à 50,0% en poids.

FIG. 1